# EUROPEAN PATENT SPECIFICATION

(11) **EP 3 816 345 B1**
(45) Date of publication and mention of the grant of the patent: **22.02.2023**
(21) Application number: 20205240.3
(22) Date of filing: 02.11.2020
(51) Int. Cl.: D21B 1/02, B07B 1/20, B07B 1/30, D21B 1/32

(54) **METHOD AND DEVICE OF PROCESSING WASTE OBJECTS**
VERFAHREN UND VORRICHTUNG ZUR AUFBEREITUNG VON ABFALL
PROCEDE ET DISPOSITIV DE TRAITEMENT DES DECHETS

(30) Priority: 01.11.2019 NL 2024148; 12.11.2019 NL 2024220
(43) Date of publication of application: 05.05.2021
(73) Proprietor: New Wave by Innovations B.V., 6101XJ Echt (NL)
(72) Inventor: Henderickx, Mathias Wilhelmus Maria, 6065 EX Montfoort (NL)
(74) Representative: Algemeen Octrooi- en Merkenbureau B.V.

(56) References cited:
- EP-A1- 3 567 157
- US-A- 4 440 635

## Description

The present invention relates to a method of processing waste objects, wherein a waste object, comprises a plurality of materials, wherein an arrangement (100) for unraveling said waste objects is applied, said arrangement (100) comprising
- a chamber comprising an upright wall, said upright wall is provided with sieve openings, and
- at least two upright shafts, said upright shafts
   - each provided with at least an arm extending transversely to the respective shaft and into said chamber, and
   - rotatable in the same direction of rotation about upright axes of rotation of said upright shafts;
      wherein said arrangement is arranged for enabling said arms to pass at a distance of less than 15 cm in order to rip apart a waste object between distal ends of said arms of different upright shafts;
      wherein said arms are rotated about said axes of rotation and said waste objects in said chamber are subjected to the operation of said rotating arms in order to provide materials from which said waste objects are composed, and at least one material is discharged through said sieve openings from said chamber.

A method of the type mentioned is known from the EP3567157 A1, forming prior art according to Article 54(3) EPC. This describes how for example, packages for beverages, which are formed from plastic-coated cardboard, are processed in order to provide pulp fibers and plastic film. The packages are ripped apart by the arms. Relatively heavy parts (e.g. plastic caps) are collected on the bottom of the chamber, while relatively light parts and in particular those with a high surface to weight ratio swirl upward in the chamber. The relatively light parts are thrown against the wall by the arms and/or as a result of air entrained by the arms whereby small parts (cardboard fibers) leave the chamber via the sieve openings while large parts (foil) are stopped by the wall and are disposable at an upside of the chamber.

It is a problem that material accumulates against the upright wall which thereof no longer participates in the separation and further hinders the operation of the upright wall.

It is an object of the present invention to reduce at least one of these problems.

To this end, a method is foreseen in which an arrangement is used, wherein
- for each upright shaft at least a rotational volume is defined by said at least one arm extending from an upright shaft,
- the direction of rotation of an upright shaft defines a flow direction for air above said rotational volume above said upright shaft along said upright wall, and
- said upright wall comprises a plurality of wall sections, an wall section comprising
   - a first side facing the lumen of said chamber and a second side facing away from said lumen,
   - an upstream part and a downstream part,
   - a sieve section, said sieve section comprising
      - a first sieve section side facing said lumen of said chamber and a second sieve section side facing away from said lumen, and
      - an upstream edge and a downstream edge determined by said flow direction, and
   - a frame section, said frame section - if said frame section is present at said downstream edge of said sieve section - extends into the lumen of said chamber with respect to said first sieve section side by a distance R of less than 2 mm beyond said first sieve section side;
      and wherein at said downstream edge of the sieve sheet, said second sieve section side extends deeper into the lumen than said upstream part of a downstream adjacent wall section.

This reduces the risk that material will get caught in a sieve section. The distance R is preferably less than 1 mm and most preferably 0 mm. The frame may be absent at the location of the downstream edge.

Advantageously, the frame section is U-shaped, with the sieve section retained within the U by the frame section.

A waste object according the present invention comprises a plurality of materials. The chemical composition of the plurality of materials can be identical or different, differ in density and/or differ in surface/weight ratio. As illustration with the processing of drinking cartons as an example: Plastic caps from drinking cartons - but also impurities that come with the waste objects such as stones - will be collected at the bottom of the chamber, while plastic foil will swirl up due to the turbulence and can be separated high in the chamber. Paper fibers can leave the chamber through the sieve openings. Where paper fibers are still attached to plastic foil, that material is relatively heavy and is thrown against the sieve, causing the fibers to detach and be separated via the sieve openings. The plastic foil remains behind and, as the fibers have been removed, goes up more easily, where the foil can be removed.

For example, the invention is suitable for the processing of multi-layer waste objects. An example of this are laminates. A waste object is for example composed of one or more layers selected from plastic foil, rubber, foam, cellulose fibers and/or textile.

Advantageously, the device according to the invention is arranged for simultaneously passing a line extending between two adjacent upright axes of rotation through the distal ends of the arms in order to rip apart a waste object between distal ends of the arms of different upright shafts passing the line.

Usually, if the given air guiding element is partly above a rotational volume, then the given air guiding element is above only one rotational volume.

The size of the sieve openings is selected depending of the separation to be carried out, and is usually between 1 and 15 mm, preferably between 3 and 12 mm.

The distance D of the downstream edge over which R is less than 2 mm is usually at least 50% of the length of said downstream edge, more preferably at least 80% of the length of the downstream edge.

A preferred embodiment is characterized in that said downstream edge of said second sieve section side overlaps the downstream adjacent wall section.

The use of such an arrangement is very effective in preventing material from sticking to the wall. Thereby, the second side of the wall section is facing the first side of the downstream adjacent wall section, in particular the upstream part thereof.

A preferred embodiment is characterized in that said sieve openings are slit shaped.

This allows relatively long objects to pass, such as fibers. The ratio between the greatest length of a slit and the greatest width is preferably at least 2, and preferably at least 4.

The slits are preferably at an angle to the horizontal of less than 45°, more preferably less than 30°, and most preferably less than 10°, such as 0°. This reduces the risk of material getting caught in a slit.

A preferred embodiment is characterized in that the slits are positioned in slots in the first section side, a slot on either side of a slot having two slot walls at an angle between 70° and 135°. Said slot walls being convex, concave or planar.

The slot walls help orient elongated materials such as fibers and thus facilitate removing thereof through the slot.

A preferred embodiment is characterized in that - at least one upright air guiding element is provided in the chamber,
wherein a given air guiding element
- is outside all rotational volumes,
- is at least partly higher than at least one rotational volume, and
- defines in cooperation with said upright wall a passage for air along said upright wall, which passage tapers in said flow direction.

This is beneficial in that the relatively light parts are slung against the upright wall having sieve openings, which contributes in further breaking up the materials and in a part of the material leaving the chamber via the screen openings.

A preferred embodiment is characterized in that said at least one air guiding element has a radius of at least 3 cm, and preferably of at least 5 cm on at least one edge selected from an inflow edge and an outflow edge of the air guiding element.

The round shape reduces the risk of material sticking to the air guiding element.

A preferred embodiment is characterized in that said at least one air guiding element is translatably movable in a direction having a directional component transverse to the axis of rotation.

Thus, the width of the passage is adjustable and can be selected depending on the material to be subjected to separation.

Usually, after displacement, the air guiding element will be fixed in the selected position, after which the separation is carried out.

A preferred embodiment is characterized in that said at least one air guiding element is rotatable.

Thus, the degree to which the passage tapers can be selected depending on the material to be subjected to separation.

Usually, after rotation, the air guiding element will be fixed in the selected position, after which the separation is carried out.

A preferred embodiment is characterized in that said waste objects are waste objects belonging to a type of waste objects selected from i) shoes, ii) packaging for drinks or iii) tennis balls.

Packaging for drinks are understood to be cardboard packaging for dairy, soft drinks and water.

Finally, the present invention relates to an arrangement for unraveling the waste objects, said arrangement comprising
- a chamber comprising an upright wall, said upright wall provided with sieve openings, and
- at least two upright shafts, said upright shafts
   - each provided with at least an arm extending transversely of the respective axis and into the chamber, and
   - rotatable in the same direction of rotation about upright axes of rotation of said upright shafts;
      wherein said arrangement is arranged for enabling said arms to pass at a distance of less than 15 cm;
      wherein
- for each upright shaft at least a rotational volume is defined by said at least one arm extending from an upright shaft,
- the direction of rotation of an upright shaft defines a flow direction for air above said rotational volume above said upright shaft along said upright wall, and
- said upright wall comprises a plurality of wall sections, an wall section comprising
   - a first side facing the lumen of said chamber and a second side facing away from said lumen,
   - an upstream part and a downstream part,
   - a sieve section, said sieve section comprising
      - a first sieve section side facing said lumen of said chamber and a second sieve section side facing away from said lumen, and
      - an upstream edge and a downstream edge determined by said flow direction, and
   - a frame section, said frame section - if said frame section is present at said downstream edge of said sieve section - extends at said downstream edge of said sieve section into the lumen of said chamber with respect to said first sieve section side by a distance R of less than 2 mm beyond said first sieve section side;
      and wherein at said downstream edge of the sieve sheet, said second sieve section side extends deeper into the lumen than said upstream part of a downstream adjacent wall section.

Such an arrangement is suitable for use in the method according to the invention. The arrangement reduces the risk that material will get stuck in a sieve section. The distance R is preferably less than 1 mm and most preferably 0 mm. The frame may be absent at the location of the downstream edge.

Advantageously, the frame section is U-shaped, with the sieve section retained within the U by the frame section.

Advantageously, the arrangement according to the invention is arranged for simultaneously passing a line extending between two adjacent upright axes of rotation through the distal ends of the arms in order to rip apart a waste object between distal ends of the arms of different upright shafts passing the line.

The present invention also relates to the embodiments described in any combination of the dependent claims of the method, which dependent claims are not repeated for the sake of brevity.

The present invention will now be explained with reference to the figures, in which
Fig. 1A to Fig. 1C show a top view, a side view and a rear view, respectively, of an arrangement for processing waste objects;
Fig. 2 shows a longitudinal sectional view corresponding to Fig. 1B of the arrangement; and
Fig. 3A and Fig. 3B show a rear view and a sectional view through three wall sections, respectively, of the arrangement of Fig. 1.

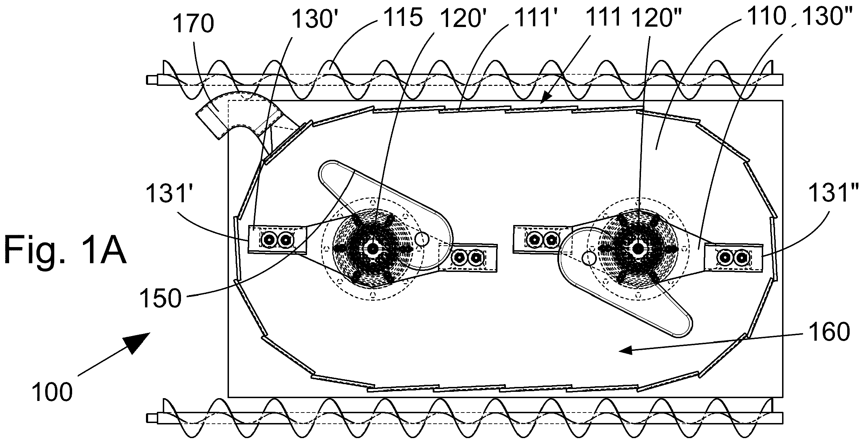

Fig. 1A to FIG. 1C show a top view, a side view and a rear view, respectively, of an arrangement 100 for processing waste objects such as old sneakers, drinking cartons and the like.

The arrangement 100 comprises a chamber 110 comprising an upright wall 111, composed of sieve plates 111'. Sieve plates include sieve openings (6 mm) which are selected depending on the waste object to be processed. Processed material leaving the chamber 110 through the sieve openings is dischargable by screw conveyors 115.

The chamber 110 is provided with two upright shafts 120. A first upright shaft 120' is provided with two arms 130' having distal ends 131'. A second upright shaft 120" is provided with two arms 130" having distal ends 131". The upright shafts 120', 120" are driven by motors 140, and are both rotating in the same direction (in this embodiment counterclockwise as seen from above). The distal ends 131', 131" of two arms 130', 130" of both the upright shafts 120 simultaneously pass a line extending between the two upright shafts 120 in order to break up waste objects introduced into the chamber 110.

Both arms 130 of an upright shaft 120 define a rotational volume. An upright air guiding element 150 is provided above that rotational volume, such as a plate or in this embodiment a body having a conical profile with rounded ends in order to prevent material from sticking to the air guiding element 150 instead of being discharged from the chamber 110.

The arms 130 can be provided with substantially radially extending plates at their distal ends, in order to increasing the area of the arms wherein the waste objects are to be hit by the arms.

The air guiding element 150 defines in cooperation with said upright wall 111 a passage 160 for air along said upright wall 111, which passage 160 tapers in the flow direction.

In the shown embodiment, the air guiding element 150 is located partly above and in its entirety above the rotational volume as defined by the arms.

For breaking up drinking cartons such as those for flat dairy or soft drinks, the rotational speed is, for example, 900 rpm, at an arm length of 85 cm (centerline shaft to distal end) and a distance between the distal ends of 5 cm. The sieve openings in the upright wall, for example, have a diameter of cm. Such an arrangement is, for example, suitable for breaking up drinking cartons. Relatively heavy parts, in particular caps, end up on the bottom of the chamber 110. Fragments of the wall side of the packaging, resulting from the ripping apart operation of the arms 130, swirl upwards and are slung against the upright wall 111. As a result, fibers of the plastic film detach from the packaging and pass through the sieve openings. The foil is discharged through a discharge pipe 170 at the top of the chamber 110, usually by means of extraction with the use of air supplied into the chamber through the screen openings.

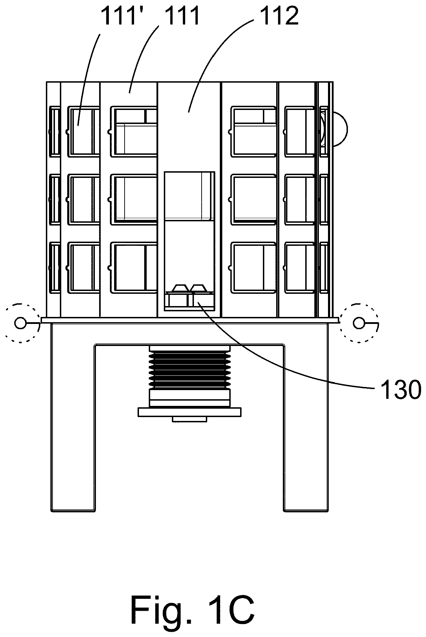

In fig. 1C, a part of the upright wall 111 is removable in order to provide an access opening 112 to the interior of the chamber 110, for example, for removing the relatively heavy fragments (for example caps).

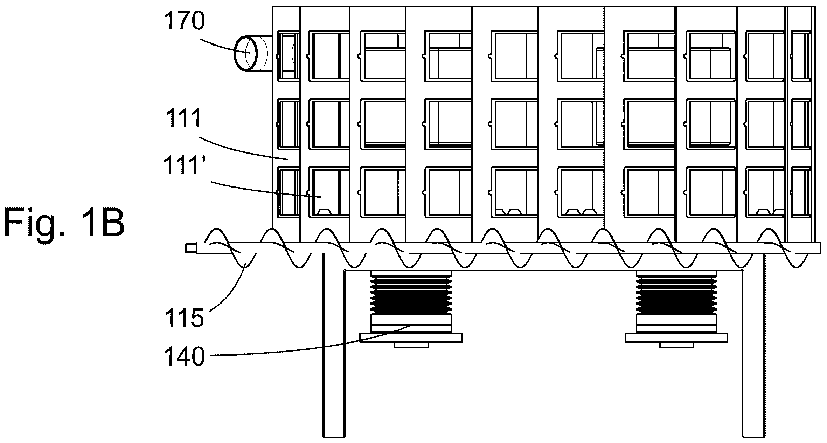

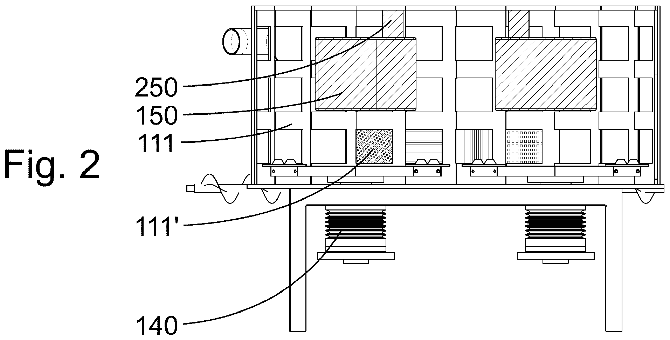

Fig. 2 shows a longitudinal sectional view corresponding to Fig. 1B of the arrangement 100, showing that the air guiding elements 150 are suspended from shafts 250. The shafts 250 allow rotation of the air guide elements 150, allowing a variable degree to which the air passage 160 tapers.

For illustrative purposes, Fig. 2 shows four different sieve plates 111', with from left to right sieve openings provided as round holes, horizontal slit holes, vertical slit holes and square holes.

In the embodiment mentioned here, the upright wall 111 comprises a plurality of wall sections 310. Each upright wall section 310 has a first side 311 facing the lumen of the chamber 110 and a second side 312 facing away from the lumen. Furthermore, each upright wall section 310 has a upstream part 313 and a downstream part 314.

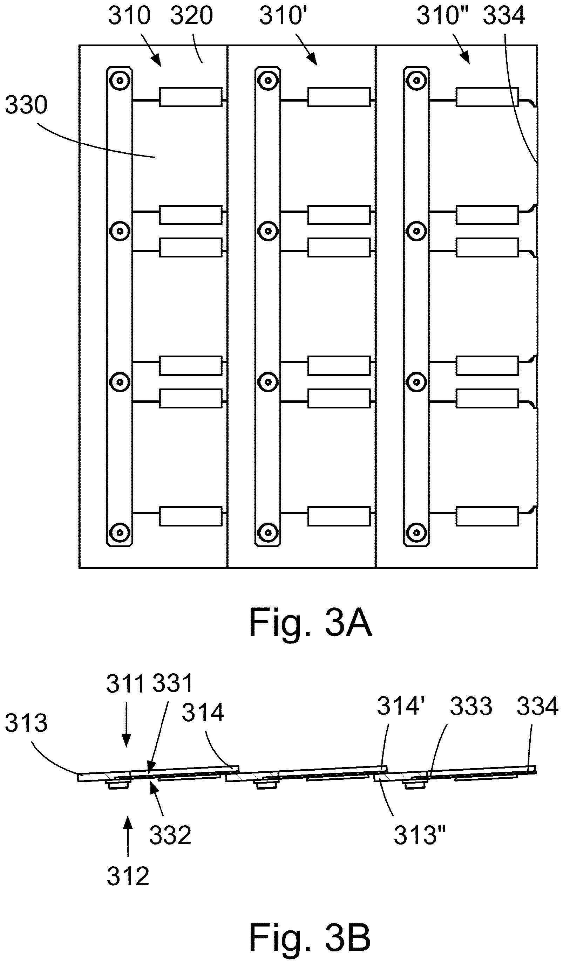

Fig. 3A and Fig. 3B show a rear view and a sectional view of three wall sections 310, respectively, of the arrangement of Fig. 1.

Each wall section 310 includes a frame section 320 which, in the embodiment shown here, comprises three sieve sections 330.

Each sieve section 330 comprises a first sieve section side 331 facing the lumen of the chamber 110 and a second sieve section side 332 facing away from the lumen, as well as an upstream edge 333 and a downstream edge 334 defined by the flow direction. The frame section 320 is absent at the downstream edge 334.

The sieve plates 111' are held in place with locking plates 321 and locking strip 322.

The downstream part 314' of upright wall section 310' overlaps with the upstream portion 313" of a downstream adjacent wall section 310" (Fig. 3B). Since the downstream edge 333 is free and extends relatively deep into the lumen, no material will accumulate at the downstream edge 333. The same applies to wall sections located downstream.

## Claims

1. Method of processing waste objects, wherein a waste object comprises a plurality of materials, wherein an arrangement (100) for unraveling said waste objects is applied, said arrangement (100) comprising
- a chamber (110) comprising an upright wall (111), said upright wall (111) is provided with sieve openings, and
- at least two upright shafts (120), said upright shafts (120)
- each provided with at least an arm (130) extending transversely to the respective shaft (120) and into said chamber (110), and
- rotatable in the same direction of rotation about upright axes of rotation of said upright shafts (120);
wherein said arrangement (100) is arranged for enabling said arms (130) to pass at a distance of less than 15 cm in order to rip apart a waste object between distal ends of said arms (130) of different upright shafts (120);
wherein said arms (130) are rotated about said axes of rotation and said waste objects in said chamber (110) are subjected to the operation of said rotating arms (130) in order to provide materials from which said waste objects are composed, and at least one material is discharged through said sieve openings from said chamber (110);
wherein an arrangement (100) is used, wherein
- for each upright shaft (120) at least a rotational volume is defined by said at least one arm (130) extending from an upright shaft (120),
- the direction of rotation of an upright shaft (120) defines a flow direction for air above said rotational volume above said upright shaft (120) along said upright wall (111), and
- said upright wall (111) comprises a plurality of wall sections, an wall section comprising
- a first side facing the lumen of said chamber and a second side facing away from said lumen,
- an upstream part and a downstream part,
- a sieve section, said sieve section comprising
- a first sieve section side facing said lumen of said chamber and a second sieve section side facing away from said lumen, and
- an upstream edge and a downstream edge determined by said flow direction, and
- a frame section, said frame section - if said frame section is present at said downstream edge of said sieve section - extends into the lumen of said chamber (110) with respect to said first sieve section side by a distance R of less than 2 mm beyond said first sieve section side;
and wherein at said downstream edge of the sieve sheet, said second sieve section side extends deeper into the lumen than said upstream part of a downstream adjacent wall section.

2. Method of claim 1, wherein said downstream edge of said second sieve section side overlaps the downstream adjacent wall section.

3. Method according to claim 1 or 2, wherein said sieve openings are slit shaped.

4. Method of claim 3, wherein the slits are positioned in slots in the first section side, a slot on either side of a slot having two slot walls at an angle between 70° and 135°. Said slot walls being convex, concave or planar.

5. Method according to any one of the preceding claims, wherein at least one upright air guiding element (150) is provided in the chamber (110),
wherein a given air guiding element (150)
- is outside all rotational volumes,
- is at least partly higher than at least one rotational volume, and
- defines in cooperation with said upright wall (111) a passage (160) for air along said upright wall (111), which passage (160) tapers in said flow direction.

6. Method according to claim 5, wherein said at least one air guiding element (150) has a radius of at least 3 cm, and preferably of at least 5 cm on at least one edge selected from an inflow edge and an outflow edge of the air guiding element (150).

7. Method according to any of the claims 5 or 6, wherein said at least one air guiding element (150) is translatably movable in a direction having a directional component transverse to the axis of rotation.

8. Method according to any one of the claims 5 - 7, wherein said at least one air guiding element (150) is rotatable.

9. Method according to any one of the preceding claims, wherein said waste objects are waste objects belonging to a type of waste objects selected from i) shoes, ii) packaging for drinks or iii) tennis balls.

10. Arrangement (100) for unraveling the waste objects, said arrangement (100) comprising
- a chamber (110) comprising an upright wall (111), said upright wall (111) provided with sieve openings, and
- at least two upright shafts (120), said upright shafts (120)
- each provided with at least an arm (130) extending transversely of the respective axis (120) and into the chamber (110), and
- rotatable in the same direction of rotation about upright axes of rotation of said upright shafts (120);
wherein said arrangement (100) is arranged for enabling said arms (130) to pass at a distance of less than 15 cm;
wherein
- for each upright shaft (120) at least a rotational volume is defined by said at least one arm (130) extending from an upright shaft (120),
- the direction of rotation of an upright shaft (120) defines a flow direction for air above said rotational volume above said upright shaft (120) along said upright wall (111), and
- said upright wall (111) comprises a plurality of wall sections, an wall section comprising
- a first side facing the lumen of said chamber and a second side facing away from said lumen,
- an upstream part and a downstream part,
- a sieve section, said sieve section comprising
- a first sieve section side facing said lumen of said chamber and a second sieve section side facing away from said lumen, and
- an upstream edge and a downstream edge determined by said flow direction, and
- a frame section, said frame section - if said frame section is present at said downstream edge of said sieve section - extends at said downstream edge of said sieve section into the lumen of said chamber (110) with respect to said first sieve section side by a distance R of less than 2 mm beyond said first sieve section side;
and wherein at said downstream edge of the sieve sheet, said second sieve section side extends deeper into the lumen than said upstream part of a downstream adjacent wall section.

## Patentansprüche

1. Verfahren zur Aufbereitung von Abfallgegenständen, wobei ein Abfallgegenstand mehrere Materialien umfasst, wobei eine Anordnung (100) zur Trennung dieser Abfallgegenstände verwendet wird, wobei die Anordnung (100) Folgendes umfasst:
- eine Kammer (110), die eine aufrechte Wand (111) umfasst, wobei die aufrechte Wand (111) mit Sieböffnungen versehen ist, und
- mindestens zwei aufrechte Wellen (120),
- wobei die aufrechten Wellen (120) jeweils mit mindestens einem Arm (130) versehen sind, der sich quer zur jeweiligen Welle (120) und in die Kammer (110) erstreckt und
- in dieselbe Drehrichtung um aufrechte Drehachsen der aufrechten Wellen (120) drehbar sind;
wobei die Anordnung (100) dazu angeordnet ist, zu ermöglichen, dass sich die Arme (130) in einer Entfernung von weniger als 15 cm vorbeibewegen, um einen Abfallgegenstand zwischen distalen Enden der Arme (130) verschiedener aufrechter Wellen (120) zu zerreißen;
wobei die Arme (130) um die Drehachsen gedreht werden und die Abfallgegenstände in der Kammer (110) dem Betrieb der Dreharme (130) ausgesetzt sind, um Materialien vorzusehen, aus denen die Abfallgegenstände bestehen, und wobei mindestens ein Material durch die Sieböffnungen von der Kammer (110) abgelassen wird;
wobei
eine Anordnung (100) verwendet wird, wenn
- für jede aufrechte Welle (120) mindestens ein Drehvolumen durch den mindestens einen Arm (130) definiert wird, der sich von einer aufrechten Welle (120) erstreckt,
- die Drehrichtung einer aufrechten Welle (120) eine Strömungsrichtung für Luft über dem Drehvolumen über der aufrechten Welle (120) entlang der aufrechten Wand (111) definiert und
- die aufrechte Wand (111) mehrere Wandabschnitte umfasst, wobei ein Wandabschnitt Folgendes umfasst:
- eine erste Seite, die dem Hohlraum der Kammer zugewandt ist, und eine zweite Seite, die vom Hohlraum abgewandt ist,
- einen vorgelagerten Teil und einen nachgelagerten Teil,
- einen Siebabschnitt, wobei der Siebabschnitt Folgendes umfasst:
- eine erste Siebabschnittsseite, die dem Hohlraum der Kammer zugewandt ist, und eine zweite Siebabschnittsseite, die vom Hohlraum abgewandt ist, und
- eine durch die Strömungsrichtung bestimmte vorgelagerte Kante und nachgelagerte Kante und
- einen Rahmenabschnitt, wobei sich der Rahmenabschnitt - falls der Rahmenabschnitt an der nachgelagerten Kante des Siebabschnitts vorhanden ist - in Bezug zur ersten Siebabschnittsseite um eine Entfernung R von weniger als 2 mm über die erste Siebabschnittsseite in den Hohlraum der Kammer (110) erstreckt;
und wobei sich auf der nachgelagerten Kante des Siebblechs die zweite Siebabschnittsseite tiefer in den Hohlraum erstreckt als der vorgelagerte Teil eines nachgelagerten angrenzenden Wandabschnitts.

2. Verfahren nach Anspruch 1, wobei die nachgelagerte Kante der zweiten Siebabschnittsseite den nachgelagerten angrenzenden Wandabschnitt überlagert.

3. Verfahren nach Anspruch 1 oder 2, wobei die Sieböffnungen schlitzförmig sind.

4. Verfahren nach Anspruch 3, wobei die Schlitze in Spalten in der ersten Abschnittsseite angeordnet sind, wobei ein Spalt auf beiden Seiten eines Spalts zwei Spaltwände in einem Winkel zwischen 70° und 135° aufweist, wobei die Spaltwände konvex, konkav oder plan sind.

5. Verfahren nach einem der vorstehenden Ansprüche, wobei mindestens ein aufrechtes Luftleitungselement (150) in der Kammer (110) vorgesehen ist,
wobei ein jeweiliges Luftleitungselement (150)
- sich außerhalb aller Drehvolumen befindet,
- zumindest teilweise höher als mindestens ein Drehvolumen ist und
- zusammen mit der aufrechten Wand (111) einen Durchgang (160) für Luft entlang der aufrechten Wand (111) definiert, wobei sich der Durchgang (160) in die Strömungsrichtung verjüngt.

6. Verfahren nach Anspruch 5, wobei das mindestens eine Luftleitungselement (150) einen Radius von mindestens 3 cm und vorzugsweise mindestens 5 cm an mindestens einer Kante aufweist, die aus einer Zuflusskante und einer Abflusskante des Luftleitungselements (150) ausgewählt ist.

7. Verfahren nach einem der Ansprüche 5 oder 6, wobei das mindestens eine Luftleitungselement (150) in eine Richtung verschiebbar beweglich ist, die eine Richtungskomponente quer zur Drehachse aufweist.

8. Verfahren nach einem der Ansprüche 5-7, wobei das mindestens eine Luftleitungselement (150) drehbar ist.

9. Verfahren nach einem der vorstehenden Ansprüche, wobei die Abfallgegenstände zu einem Abfallgegenstandstyp gehören, der aus i) Schuhen, ii) Getränkeverpackungen und iii) Tennisbällen ausgewählt ist.

10. Anordnung (100) zur Trennung der Abfallgegenstände, wobei die Anordnung (100) Folgendes umfasst:
- eine Kammer (110), die eine aufrechte Wand (111) umfasst, wobei die aufrechte Wand (111) mit Sieböffnungen versehen ist, und
- mindestens zwei aufrechte Wellen (120), wobei die aufrechten Wellen (120)
- jeweils mit mindestens einem Arm (130) versehen sind, der sich quer zur jeweiligen Achse (120) und in die Kammer (110) erstreckt und
- in dieselbe Drehrichtung um aufrechte Drehachsen der aufrechten Wellen (120) drehbar sind;
wobei die Anordnung (100) dazu angeordnet ist, zu ermöglichen, dass sich die Arme (130) in einer Entfernung von weniger als 15 cm vorbeibewegen;
wobei
- für jede aufrechte Welle (120) mindestens ein Drehvolumen durch den mindestens einen Arm (130) definiert wird, der sich von einer aufrechten Welle (120) erstreckt,
- die Drehrichtung einer aufrechten Welle (120) eine Strömungsrichtung für Luft über dem Drehvolumen über der aufrechten Welle (120) entlang der aufrechten Wand (111) definiert und
- die aufrechte Wand (111) mehrere Wandabschnitte umfasst, wobei ein Wandabschnitt Folgendes umfasst:
- eine erste Seite, die dem Hohlraum der Kammer zugewandt ist, und eine zweite Seite, die vom Hohlraum abgewandt ist,
- einen vorgelagerten Teil und einen nachgelagerten Teil,
- einen Siebabschnitt, wobei der Siebabschnitt Folgendes umfasst:
- eine erste Siebabschnittsseite, die dem Hohlraum der Kammer zugewandt ist, und eine zweite Siebabschnittsseite, die vom Hohlraum abgewandt ist, und
- eine durch die Strömungsrichtung bestimmte vorgelagerte Kante und nachgelagerte Kante und
- einen Rahmenabschnitt, wobei sich der Rahmenabschnitt - falls der Rahmenabschnitt an der nachgelagerten Kante des Siebabschnitts vorhanden ist - in Bezug zur ersten Siebabschnittsseite um eine Entfernung R von weniger als 2 mm an der nachgelagerten Kante des Siebabschnitts über die erste Siebabschnittsseite in den Hohlraum der Kammer (110) erstreckt;
- und wobei sich auf der nachgelagerten Kante des Siebblechs die zweite Siebabschnittsseite tiefer in den Hohlraum erstreckt als der vorgelagerte Teil eines nachgelagerten angrenzenden Wandabschnitts.

## Revendications

1. Procédé de traitement d'objets de déchets, dans lequel un objet de déchet comprend une pluralité de matériaux, dans lequel un agencement (100) pour démêler lesdits objets de déchets est appliqué, ledit agencement (100) comprenant
- une chambre (110) comprenant une paroi verticale (111), ladite paroi verticale (111) est pourvue d'ouvertures de tamis, et
- au moins deux arbres verticaux (120), lesdits arbres verticaux (120)
- étant pourvus chacun d'au moins un bras (130) s'étendant transversalement à l'arbre respectif (120) et dans ladite chambre (110), et
- pouvant tourner dans la même direction de rotation autour d'axes de rotation verticaux desdits arbres verticaux (120) ;
dans lequel ledit agencement (100) est agencé pour permettre auxdits bras (130) de passer à une distance inférieure à 15 cm afin de déchirer un objet de déchet entre les extrémités distales desdits bras (130) de différents arbres verticaux (120) ;
dans lequel lesdits bras (130) sont mis en rotation autour desdits axes de rotation et lesdits objets de déchets dans ladite chambre (110) sont soumis au fonctionnement desdits bras rotatifs (130) afin de fournir des matériaux à partir desquels lesdits objets de déchets sont composés, et au moins un matériau est déchargé à travers lesdites ouvertures de tamis depuis ladite chambre (110) ;
dans lequel
un agencement (100) est utilisé, dans lequel
- pour chaque arbre vertical (120), au moins un volume de rotation est défini par ledit au moins un bras (130) s'étendant à partir d'un arbre vertical (120),
- la direction de rotation d'un arbre vertical (120) définit une direction d'écoulement pour l'air au-dessus dudit volume de rotation au-dessus dudit arbre vertical (120) le long de ladite paroi verticale (111), et
- ladite paroi verticale (111) comprend une pluralité de sections de paroi, une section de paroi comprenant
- un premier côté tourné vers la lumière de ladite chambre et un deuxième côté tourné à l'opposé de ladite lumière,
- une partie amont et une partie aval,
- une section de tamis, ladite section de tamis comprenant
- un premier côté de section de tamis tourné vers ladite lumière de ladite chambre et un deuxième côté de section de tamis tourné à l'opposé de ladite lumière, et
- un bord amont et un bord aval déterminés par ladite direction d'écoulement, et
- une section de cadre, ladite section de cadre - si ladite section de cadre est présente au niveau dudit bord aval de ladite section de tamis - s'étend dans la lumière de ladite chambre (110) par rapport audit premier côté de section de tamis sur une distance R inférieure à 2 mm au-delà dudit premier côté de section de tamis ;
et dans lequel au niveau dudit bord aval de la feuille de tamis, ledit deuxième côté de section de tamis s'étend plus profondément dans la lumière que ladite partie amont d'une section de paroi adjacente aval.

2. Procédé de la revendication 1, dans lequel ledit bord aval dudit deuxième côté de section de tamis chevauche la section de paroi adjacente aval.

3. Procédé selon la revendication 1 ou 2, dans lequel lesdites ouvertures de tamis sont en forme de fente.

4. Procédé de la revendication 3, dans lequel les fentes sont positionnées dans des encoches dans le premier côté de section, une encoche sur chaque côté d'une encoche ayant deux parois d'encoche à un angle compris entre 70° et 135°, lesdites parois d'encoche étant convexes, concaves ou planes.

5. Procédé selon l'une quelconque des revendications précédentes, dans lequel au moins un élément vertical de guidage d'air (150) est prévu dans la chambre (110),
dans lequel un élément de guidage d'air donné (150)
- est à l'extérieur de tous les volumes de rotation,
- est au moins partiellement plus haut qu'au moins un volume de rotation, et
- définit en coopération avec ladite paroi verticale (111) un passage (160) pour l'air le long de ladite paroi verticale (111), lequel passage (160) se rétrécit dans ladite direction d'écoulement.

6. Procédé selon la revendication 5, dans lequel ledit au moins un élément de guidage d'air (150) présente un rayon d'au moins 3 cm, et de préférence d'au moins 5 cm sur au moins un bord choisi parmi un bord d'entrée et un bord de sortie de l'élément de guidage d'air (150).

7. Procédé selon l'une des revendications 5 et 6, dans lequel ledit au moins un élément de guidage d'air (150) est mobile en translation dans une direction ayant une composante directionnelle transversale à l'axe de rotation.

8. Procédé selon l'une quelconque des revendications 5 à 7, dans lequel ledit au moins un élément de guidage d'air (150) est rotatif.

9. Procédé selon l'une quelconque des revendications précédentes, dans lequel lesdits objets de déchets sont des objets de déchets appartenant à un type d'objets de déchets choisis parmi i) des chaussures, ii) des emballages pour boissons ou iii) des balles de tennis.

10. Agencement (100) pour démêler les objets de déchets, ledit agencement (100) comprenant
- une chambre (110) comprenant une paroi verticale (111), ladite paroi verticale (111) étant pourvue d'ouvertures de tamis, et
- au moins deux arbres verticaux (120), lesdits arbres verticaux (120)
- étant pourvus chacun d'au moins un bras (130) s'étendant transversalement à l'axe respectif (120) et dans la chambre (110), et
- pouvant tourner dans la même direction de rotation autour d'axes de rotation verticaux desdits arbres verticaux (120) ;
dans lequel ledit agencement (100) est agencé pour permettre auxdits bras (130) de passer à une distance inférieure à 15 cm ;
dans lequel
- pour chaque arbre vertical (120), au moins un volume de rotation est défini par ledit au moins un bras (130) s'étendant à partir d'un arbre vertical (120),
- la direction de rotation d'un arbre vertical (120) définit une direction d'écoulement pour l'air au-dessus dudit volume de rotation au-dessus dudit arbre vertical (120) le long de ladite paroi verticale (111), et
- ladite paroi verticale (111) comprend une pluralité de sections de paroi, une section de paroi comprenant
- un premier côté tourné vers la lumière de ladite chambre et un deuxième côté tourné à l'opposé de ladite lumière,
- une partie amont et une partie aval,
- une section de tamis, ladite section de tamis comprenant
- un premier côté de section de tamis tourné vers ladite lumière de ladite chambre et un deuxième côté de section de tamis tourné à l'opposé de ladite lumière, et
- un bord amont et un bord aval déterminés par ladite direction d'écoulement, et
- une section de cadre, ladite section de cadre - si ladite section de cadre est présente au niveau dudit bord aval de ladite section de tamis - s'étend au niveau dudit bord aval de ladite section de tamis dans la lumière de ladite chambre (110) par rapport audit premier côté de section de tamis par une distance R inférieure à 2 mm au-delà dudit premier côté de section de tamis ;
et dans lequel au niveau dudit bord aval de la feuille de tamis, ledit deuxième côté de section de tamis s'étend plus profondément dans la lumière que ladite partie amont d'une section de paroi adjacente aval.
